**Europäisches Patentamt**

(19) **European Patent Office**

**Office européen des brevets**

(11) Publication number : **0 459 623 B1**

## (12) EUROPEAN PATENT SPECIFICATION

(45) Date of publication of patent specification :
**08.06.94 Bulletin 94/23**

(21) Application number : **91303687.7**

(22) Date of filing : **24.04.91**

(51) Int. Cl.⁵ : **B01D 71/02, // D01F9/14**

(54) **Asymmetric hollow filamentary carbon membrane and process for producing same.**

(30) Priority : **27.04.90 JP 110157/90
27.11.90 JP 320958/90**

(43) Date of publication of application :
**04.12.91 Bulletin 91/49**

(45) Publication of the grant of the patent :
**08.06.94 Bulletin 94/23**

(84) Designated Contracting States :
**DE FR GB**

(56) References cited :
**US-A- 4 444 574
US-A- 4 685 940
PATENT ABSTRACTS OF JAPAN, vol. 10, no.
63 (C-332)[2120], 13th March 1986; & JP-A-60
202 703 (TORAY K.K.) 14-10-1985**

(73) Proprietor : **UBE INDUSTRIES, LTD.
12-32, Nishihonmachi 1-chome
Ube-shi, Yamaguchi (JP)**

(72) Inventor : **Yoshinaga, Toshimune, c/o Ube
Industries Ltd.
Chiba Kenkyusho,
8-1, Goi Minamikaigan
Ichihara-shi, Chiba (JP)**
Inventor : **Shimazaki, Hiroshi, c/o Ube
Industries Ltd.
Chiba Kenkyusho,
8-1, Goi Minamikaigan
Ichihara-shi, Chiba (JP)**
Inventor : **Kusuki, Yoshihiro, c/o Ube
Industries Ltd.
Chiba Kenkyusho,
8-1, Goi Minamikaigan
Ichihara-shi, Chiba (JP)**
Inventor : **Sumiyama, Yoshiyuki, c/o Ube
Industries Ltd.
Chiba Kenkyusho,
8-1, Goi Minamikaigan
Ichihara-shi, Chiba (JP)**

(74) Representative : **Arthur, Bryan Edward et al
Withers & Rogers
4 Dyer's Buildings
Holborn
London EC1N 2JT (GB)**

## Description

The present invention relates to an asymmetric hollow filamentary carbon membrane and a process for producing same.

More particularly, the present invention relates to an asymmetric hollow filamentary carbon membrane having an excellent gas separating property, a superior heat resistance and a high solvent resistance, and useful for separating a hydrogen gas from a hydrogen-methane gas mixture or a carbon dioxide gas from a carbon dioxide-nitrogen gas mixture, and a process for producing same from an asymmetric aromatic imide polymer material hollow filament, with a high efficiency.

Currently, it is known that various types of asymmetric gas separating membranes having a high permeation rate and selectivity are produced from various types of polymeric materials. Among these known gas separating membranes, U.S. Patent No. 4690873 discloses that asymmetric gas-separating hollow filamentary membranes produced from a solution of a solvent soluble aromatic imide polymer material, which is a polymerization and imidization product of a biphenyl tetracarboxylic dianhydride and an aromatic diamine, by a wet spinning method have an excellent heat resistance and a superior solvent resistance.

Nevertheless, it is also known that, when the known gas-separating membranes are brought into contact with a gas mixture containing, as an impurity, an organic solvent, for example, hexane or toluene, some of the gas-separating membranes are adversely influenced by the organic solvent. Therefore, when this type of gas-separating membrane is employed, the organic solvent must be removed from the gas mixture prior to the gas-separating operation.

Recently, for example, Japanese Unexamined Patent Publication Nos. 60-179,102 and 1-221,518 disclosed a process for producing a gas separating carbon membrane having a high chemical resistance by heat-treating an organic polymer membrane at a very high temperature, to carbonize the organic polymer membrane, and a gas separating hollow filamentary carbon membrane produced by the above-mentioned process.

Also, Japanese Unexamined Patent Publication No. 60-179,102 discloses a process for producing a gas separating carbon membrane by heat carbonizing a polyacrylonitrile membrane at a temperature of about 1200°C, to prepare a carbon membrane having a number of fine pores. This carbon membrane prepared by the above-mentioned process is a substantially porous type gas-separating membrane and exhibits a relatively high gas-permeability and a very poor permeation selectivity. Therefore, this carbon membrane is not useful for practical gas separation.

Japanese Unexamined Patent Publication No. 1-221,518 discloses a process for producing a specific hollow filamentary carbon membrane, comprising the steps of applying an oxidative cross-linking treatment to a porous hollow filamentary membrane comprising an organic polymer, for example, polyacrylonitrile, cellulose or polyvinyl alcohol; carbonizing the porous hollow filamentary membrane at a temperature of 600°C to 1000°C in an inert gas atmosphere; activation-treating the carbonized hollow filamentary membrane in an oxidative gas atmosphere containing water vapor or carbon dioxide gas to provide a hollow filamentary carbon membrane having a number of fine pores with a pore size of 1 to 5 $\mu$m; and optionally, immersing the hollow filamentary carbon menbrane in one or more hydrocarbon solvents and heat-treating the hydrocarbon solvent-immersed hollow filamentary carbon membrane at a temperature of 900°C or more in an inert gas atmosphere for a time of one minute or more, to thermally shrink the pores in the membrane; and a specific hollow filamentary carbon membrane produced by the above-mentioned process.

In the above-mentioned process, it is necessary to provide and employ the porous hollow filamentary membrane having a pore size of 1.0 to 5-0m $\mu$m, from the organic polymer hollow filamentary membrane, but the procedure for producing the porous hollow filamentary membrane is very complicated. Also, the heat-treatment procedures for shrinking the pores in the porous membrane are not simple, and are difficult to precisely control. Accordingly, the yield of the final hollow filamentary membrane is 30% or less, and thus the producibility thereof is very poor.

An object of the present invention is to provide an asymmetric hollow filamentary carbon membrane containing at least 70% by weight of carbon and having an excellent gas-separating property comparative to that of conventional gas-separating aromatic polyimide membranes, and a superior heat resistance and solvent resistance, and a process for producing same at a high industrial productivity and efficiency. Another object of the present invention is to provide an asymmetric hollow filamentary carbon membrane having a dense outside surface layer and a porous inside base layer and having an excellent gas permeative selectivity and a superior heat and solvent resistance, which thus is useful for selectively collecting a specific gas from a gas mixture, and a process for producing same at a satisfactory industrial productivity and yield.

The above-mentioned objects can be attained by the asymmetric hollow filamentary carbon membrane and the process for producing same, of the present invention.

The asymmetric hollow filamentary carbon membrane of the present invention is composed of a partial carbonization product of an asymmetric hollow filament comprising a aromatic imide polymer material, comprises 70% to 93% by weight of carbon, 3.5% to 7.0% by weight of nitrogen, 1.0% to 4.0% by weight of hydrogen and the balance consisting of at least one member selected from oxygen, sulfur and other elements, and has a dense layer located in the outside surface portion of the hollow filamentary membrane and a porous base layer continued from the dense layer and located in the inside surface portion of the hollow filamentary membrane.

The process of the present invention for producing the above-mentioned asymmetric hollow filamentary carbon membrane, comprises the steps of:

forming an asymmetric hollow filament comprising an aromatic imide polymer material and having a dense layer located in the outside surface portion thereof and a porous portion located in the inside surface portion thereof and having a number of fine pores;

thermally stabilizing the asymmetric aromatic imide polymer material hollow filament by heat-treating it in a molecular oxygen-containing atmosphere at a temperature of from 250 to 495°C such that the asymmetric structure of the hollow filament remains unchanged;

partially carbonizing the thermally stabilized aromatic imide polymer material hollow filament in an inert gas atmosphere at a temperature of 500 to 900°C.

The process of the present invention optionally further comprises an additional step of, after the partial carbonizing step, heat treating the resultant hollow filamentary carbon membrane in a molecular oxygen-containing gas atmosphere at a temperature of 250°C to 450°C.

The asymmetric hollow filamentary carbon membrane of the present invention is prepared from an asymmetric hollow filament comprising an aromatic imide polymer material by a process including at least a partial carbonization step.

The aromatic hollow filamentary membrane of the present invention comprises 70% to 93% by weight of carbon, 3.5% to 7.0% of nitrogen, 1.0% to 4.0% by weight of hydrogen and the balance consisting of at least one member selected from oxygen, sulfur and other elements, preferably 70 to 90% by weight of carbon, 4.0% to 6.5% by weight of nitrogen, 1.5 to 3.5% by weight of hydrogen and the balance consisting of at least one member selected from oxygen and sulfur.

The asymmetric hollow filamentary membrane of the present invention has a dense layer located in the outside surface portion thereof, preferably having a thickness of 0.0005 to 5 $\mu$m, more preferably of 0.001 to 2 $\mu$m, and a porous base layer continued from the dense layer and located in the inside surface portion thereof and preferably having a thickness of 10 to 1000 $\mu$m more preferably 20 to 1000 $\mu$m and provided with a number of fine pores having an average pore size of 5 to 2000m $\mu$m, more preferably 10 to 1000m $\mu$m.

Preferably, the asymmetric hollow filamentary carbon membrane of the present invention exhibits a hydrogen gas permeability [$P_{H2}$] of 3 x $10^{-5}$ to 80 x $10^{-5}$ cm$^3$/cm$^2$·sec·cmHg, more preferably 5 x $10^{-5}$ to 60 x $10^{-5}$ cm$^3$/cm$^2$·sec·cmHg at a temperature of 50°C, and a ratio [$P_{H2}$]/[$P_{CH4}$] of the hydrogen gas permeability [$P_{H2}$] to methane gas permeability [$P_{CH4}$] of 80 to 1000, more preferably 100 to 800, at a temperature of 50°C.

The ratio [$P_{H2}$]/[$P_{CH4}$] represents a permeative selectivity of the separating membrane for the hydrogen gas from the methane gas. Namely, the ratio [$P_{H2}$]/[$P_{CH4}$] refers to a degree of selective separation of the hydrogen gas from the methane gas through the separating membrane.

In the asymmetric hollow filamentary carbon membrane of the invention, the content of the carbon therein must be from 70% to 93% by weight.

When the content of carbon is less than 70% by weight, the resultant asymmetric hollow filamentary carbon membrane exhibits an undesirably increased solubility in an organic solvent, for example, n-hexane, benzene, toluene, xylene or cyclohexane, and thus an unsatisfactory permeative selectivity. Also, when the content of carbon is more than 93% by weight, the resultant asymmetric hollow filamentary membrane exhibits a lowered hydrogen gas permeability [$P_{H2}$], and thus an undesirably reduced permeative selectivity for hydrogen gas (corresponding to the ratio [$P_{H2}$]/[$P_{CH4}$]).

The contents of carbon, nitrogen, hydrogen and other elements in the asymmetric hollow filamentary carbon membrane can be controlled by the process of the present invention, which will be explained hereinafter.

The asymmetric hollow filamentary carbon membrane of the present invention preferably has an outside diameter of 100 to 2000 $\mu$m, more preferably 150 to 1000 $\mu$m, more preferably has a thickness of membrane of 10 to 300 $\mu$m, more preferably 20 to 150 $\mu$m.

The asymmetric hollow filamentary carbon membrane of the present invention have an asymmetric structure derived from a very thin dense layer having an enhanced gas-separating activity and located in the outside surface portion thereof, and a relatively thick porous base layer located in the inside surface portion thereof and continued from the dense layer, to thus support the dense layer. Due to the above-mentioned asymmetric layer structure, the hollow filamentary membrane of the present invention exhibits a high permeability for a specific gas, together with an excellent permeative selectivity for the specific gas from another gas. Also,

3

even when the hollow filamentary carbon membrane of the present invention is brought into contact with a gas mixture containing an organic solvent vapor, to continuously separate a specific gas from the gas mixture, the gas-separating property of the membrane is not adversely influenced by the organic solvent vapor in the gas mixture over the long term due to the excellent solvent resistance thereof such that, for example, the gas separating property of the membrane is retained at a high level of 70% or more even after a treatment with toluene solvent.

In the process of the present invention for producing the above-mentioned asymmetric hollow filamentary carbon membrane, an asymmetric hollow filament having a dense layer located in the outside surface portion thereof and a porous base layer continued from the dense layer, located in the inside surface portion thereof and having a number of fine pores is formed from an aromatic imide material; the resultant aromatic imide polymer material hollow filament is thermally stabilized by applying a heat treatment thereto in a molecular oxygen-containing atmosphere at a specific temperature of from 250°C to 495°C, at which temperature the asymmetric structure of the aromatic imide polymer material hollow filament remains unchanged; the thermally stabilized aromatic imide polymer material hollow filament is partially carbonized in an inert gas atmosphere at a temperature of 500°C to 900°C; and optionally, the resultant asymmetric hollow filamentary carbon membrane is heat treated in a molecular oxygen-containing atmosphere at a temperature of 250°C to 450°C.

The asymmetric hollow filament can be produced from an aromatic imide polymer material by a known hollow filament-forming method.

For example, Japanese Unexamined Patent Publication Nos. 60-150,806 and 61-133,106 discloses a process for producing a hollow filament comprising an aromatic imide polymer material and having a simple asymmetric structure composed of a dense layer formed in the outside surface portion of the hollow filament and a porous base layer formed in the inside surface portion thereof.

In another example, Japanese Unexamined Patent Publication Nos. 2-169,019 and 2-251,232 discloses a process for producing an aromatic imide polymer material hollow filament having a double-layer asymmetric structure which is composed of an inside porous layer located in the inside surface portion of the hollow filament, and an outside layer composed of a outside dense layer located in the outside surface portion of the hollow filament and an intermediate porous layer continued from the dense layer and located between the inside porous layer and the outside dense layer.

In the process for producing the aromatic imide polymer material hollow filament having the simple asymmetric structure, an aromatic imide polymer material is prepared as a polymerization and imidization product of an aromatic tetracarboxylic acid component with an aromatic diamine component in a molar amount substantially equal to that of the aromatic tetracarboxylic acid component, in an organic solvent.

The aromatic tetracarboxylic acid component preferably comprises at least one member selected from biphenyltetracarboxylic acids and dianhydrides, esters and salts thereof. More specifically, the aromatic tetracarboxylic acid component comprises 70 to 100 molar% of at least one member selected from biphenyltetracarboxylic acids and dianhydrides, esters and salts thereof and 0 to 30 molar% of at least one aromatic tetracarboxylic acid components other than the above-mentioned biphenyltetracarboxylic acid compounds.

The diamine component preferably comprises at least one aromatic diamine. More specifically, the diamine component comprises 50 to 100 molar% of at least one aromatic diamine having two or more aromatic cyclic structures, for example, diaminodialkyldiphenylsulfone, diaminodiphenylmethane or 4,4'-diaminodiphenylether, and 0 to 50 molar% of at least one aromatic diamine other than the above mentioned diamine.

The organic solvent for the polymerization and imidization procedure comprises at least one member selected from phenolic compounds, for example, p-chlorophenol, p-bromophenol and 2,4-dichlorophenol.

The resultant solution of the aromatic imide polymer material in the organic solvent can be utilized as a dope solution for forming a hollow filament.

In the formation of the hollow filament, the dope solution is extruded through a hollow filament-forming spinning orifice (a tube-in-orifice type) into an inert gas atmosphere, for example, containing nitrogen gas; the resultant hollow filamentary stream of the dope solution is coagulated in a coagulating liquid to form a solid hollow filament; and the resultant coagulated hollow filament of the aromatic imide polymer material is dried.

The coagulating liquid consists of, for example, an aqueous solution of ethyl alcohol is compatible with the organic solvent in the dope solution but cannot dissolve the aromatic imide polymer material therein.

The coagulated hollow filament is preferably washed with ethylalcohol to remove the organic solvent from the hollow filament, the ethylalcohol in the hollow filament is replaced by a isooctane solvent, and then the resultant hollow filament is dried.

The resultant aromatic imide polymer material has an asymmetric structure derived from a dense layer located in the outside surface portion of the hollow filament and preferably having a thickness of 0.001 to 5 μm and a porous layer located in the inside surface portion of the hollow filament, continued from the dense

EP 0 459 623 B1

layer, provided with a number of fine pores and having a thickness of 10 to 2000 μm which is larger than that of the dense layer.

The above-mentioned asymmetric structure is very important to the obtaining of the hollow filamentary carbon membrane of the present invention provided with the asymmetric structure as defined above and having an excellent gas-separating property.

Preferably, the asymmetric aromatic imide polymer material hollow filament exhibits a permeability for hydrogen gas of $1 \times 10^{-5}$ to $100 \times 10^{-5}$ cm³/cm²·sec·cmHg, more preferably $2 \times 10^{-5}$ to $70 \times 10^{-5}$ cm³/cm²·sec·cmHg, at a temperature of 50°C and a ratio $[P_{H2}]/[P_{CH4}]$ of the hydrogen gas permeability $[P_{H2}]$ to a methane gas permeability $[P_{CH4}]$ of 30 to 250, more preferability of 50 to 200. As mentioned above, the ratio $[P_{H2}]/[P_{CH4}]$ represents a permeative selectivity of the membrane for the hydrogen gas from the methane gas.

The aromatic imide polymer material hollow filament having the above-mentioned double layered asymmetric structure can be produced by preparing two dope solutions different from each other and each containing a solvent-soluble aromatic imide polymer material, extruding the two dope solutions through an spinning orifice for forming a composite hollow filament, and coagulating and finishing in the same manner as mentioned above.

The asymmetric hollow filament comprising the aromatic imide polymer material is then subjected to a thermal stabilizing step.

The thermal stabilizing step is carried out by heat-treating the aromatic imide polymer material hollow filament in an molecular oxygen-containing atmosphere at a temperature of 250°C to 495°C, more preferably 260°C to 450°C, for 0.1 to 100 hours, preferably 0.3 to 50 hours.

The oxygen-containing atmosphere may be the ambient air atmosphere or an atmosphere containing an oxygen gas and at least one other gas, for example, nitrogen gas.

The thermal stabilizing step is carried out to partially cross-link or partially cyclize the aromatic imide polymer material in the hollow filament and to make the hollow filament infusible and insoluble in a solvent, while ensuring that the asymmetric structure of the hollow filament remains unchanged. Accordingly, the thermal stabilizing step must be carried out at a temperature from 250°C to 495°C, as at this temperature the asymmetric structure of the aromatic imide polymer material hollow filament remains unchanged

Practically, the thermal stabilizing step for the aromatic imide polymer material hollow filament is carried out when the aromatic imide polymer material has a softening or glass transition temperature, at a temperature of at least 5°C below the softening or glass transition temperature of the aromatic imide polymer material, or, when the aromatic imide polymer material does not exhibit a softening or glass-transition temperature, at a temperature at which any significant change in the asymmetric structure of the aromatic imide polymer material hollow filament cannot be recognized by microscopic observation or a remarkable change in the average size of the fine pores in the porous layer, for example, a large reduction of more than 50% in the average pore size, cannot be observed under a microscope.

The heat treatment for the thermal stabilizing step can be carried out in all operations, as long as the heat-treating temperature is from 250°C to 495°C and does not adversely influence the asymmetric structure or the average size of the fine pores. For example, the thermal stabilizing step can be effected by gradually raising the heat treating temperature of the aromatic imide polymer material hollow filament from 280°C to 450°C over a time of from 0.2 to 100 hours, or by stepwise heat treating the hollow filament at a temperature of 250°C to 350°C for 5 to 100 hours, preferably 10 to 50 hours, and then at a temperature of from 350°C to 490°C, for 10 to 300 minutes, preferably 20 to 200 minutes.

The continuous thermal stabilizing step can be carried out by continuously feeding the aromatic imide polymer material hollow filament to a heating furnace at the predetermined temperature. Also, the thermal stabilizing operation can be applied to a plurality of hollow filaments in the form of a bundle. The hollow filament bundle can be continuously heat treated while moving in a heating furnace at a predetermined travelling speed, or batchwise in a heating oven for a predetermined residence time.

If the thermal stabilizing step in the molecular oxygen-containing atmosphere is omitted, the asymmetric structure of the aromatic imide polymer material hollow filament will be modified or lost in the subsequent partially carbonizing step.

When the thermal stabilizing temperature is higher than that as defined above, the asymmetric structure will be modified or lost and the resultant hollow filamentary carbon membrane will exhibit an unsatisfactory gas-separating property.

Also, when the thermal stabilizing temperature is lower than 250°C, the stabilizing effect for the aromatic imide polymer material hollow filament will be too low, and thus the final product will exhibit a poor gas-separating property.

The partial carbonizing step is carried out by heating the thermally stabilized asymmetric aromatic imide polymer material hollow filament in an inert gas comprising at least one member selected from, for example

5

nitrogen, helium and argon gases, at a temperature of from 500°C to 900°C, preferably 550°C to 800°C, for 0.5 second to 100 minutes, preferably 1 second to 50 minutes.

The partially carbonizing step can be effected by continuously raising the carbonizing temperature of the inert gas atmosphere from a level of from 500°C to 600°C to a level of from 700°C to 800°C over a time of 10 seconds to 60 minutes, or by a stepwise heating at a primary high temperature of 500°C to 550°C for 0.5 to 60 minutes, preferably 1 to 30 minutes and then at a secondary high temperature of 600°C to 800°C, for 0.5 second to 20 minutes, preferably 1 second to 10 minutes.

The partial carbonizing step can be continuously carried out by passing the thermally stabilized hollow-filament through a heating furnace at a predetermined high temperature and a predetermined traveling speed. In this continuous carbonizing method, a plurality of the hollow filaments are carbonized in the form of a bundle. Alternatively, the bundled hollow filaments can be placed in a heating oven and partially carbonized batchwise in an oven for a predetermined time.

The partial carbonizing step is effected to an extent such that the resultant hollow filamentary carbon membrane comprises 70% to 93% by weight of carbon, 3.5% to 7% by weight of nitrogen, 1.0% to 4.0% of hydrogen and the balance consisting of at least one member selected from oxygen, sulfur and other elements, has an asymmetric structure comprising a dense layer located in the outside surface portion thereof and a porous base layer continued from the dense layer and located in the inside surface portion thereof, and preferably exhibits a hydrogen gas permeability $[P_{H2}]$ of $3 \times 10^{-5}$ to $80 \times 10^{-5}$ $cm^3/cm^2 \cdot sec \cdot cmHg$ at a temperature of 50°C and a hydrogen gas permeative selectivity represented by a ratio $[P_{H2}]/[P_{CH4}]$ of 80 to 1000, more preferably 100 to 800, still more preferably 200 to 800.

In the process of the present invention, the hollow filamentary carbon membrane is optionally further subjected to an additional heat treating step in a molecular oxygen-containing atmosphere at a temperature of 250°C to 450°C, preferably 300°C to 400°C for 0.2 to 50 hours, preferably 0.5 to 10 hours.

Preferably, the hollow filamentary carbon membrane to be subjected to the additional heat treatment step has a carbon dioxide gas permeability $[P_{CO2}]$ of $0.5 \times 10^{-5}$ to $10 \times 10^{-5}$ $cm^3/cm^2 \cdot sec \cdot cmHg$ at a temperature of 30°C and a permeative selectivity for the carbon dioxide gas from a nitrogen gas represented by a ratio $[P_{CO2}]/[P_{N2}]$ of the carbon dioxide gas permeability $[P_{CO2}]$ to a nitrogen gas permeability $[P_{N2}]$ of 10 to 70, more preferably 20 to 60, at a temperature of 30°C.

Optionally, before the additional heat treating step, the hollow filamentary carbon membrane is treated with a concentrated sulfuric acid or nitric acid at a temperature of 0°C to 80°C, preferably 5°C to 60°C for about 3 to 30 hours, preferably 5 to 20 hours, and then with an ion-exchanged water at a temperature of 5 to 60°C.

This acid treatment effectively enhances the permeative selectivity of the resultant hollow filamentary membrane for carbon dioxide gas.

The additionally heat treated hollow filamentary carbon membrane of the present invention preferably has a carbon dioxide gas permeability $[P_{CO2}]$ of $1 \times 10^{-5}$ to $80 \times 10^{-5}$ $cm^3/cm^2 \cdot sec \cdot cmHg$, more preferably $2 \times 10^{-5}$ to $60 \times 10^{-5}$ $cm^3/cm^2 \cdot sec \cdot cmHg$ and a permeability ratio $[P_{CO2}]/[P_{N2}]$ of the carbon dioxide gas permeability $[P_{CO2}]$ to a nitrogen gas permeability $[P_{N2}]$ of 20 to 100, more preferably 25 to 80.

As mentioned above, the asymmetric hollow filamentary membrane of the present invention has a specific carbon content of 70% to 93% by weight and is provided with a specific asymmetric structure composed of a very thin dense layer located in the outside surface portion thereof and a relatively thick porous base layer located in the inside surface portion thereof. Therefore, the asymmetric hollow filamentary carbon membrane of the present invention exhibits not only an excellent gas permeability and permeative selectivity but also a superior heat resistance and solvent resistance.

EXAMPLES

The specific examples presented below will more fully elaborate the ways in which the present invention can be practically utilized. It should be understood, however, that these examples are only illustrative and in no way limit the scope of the present invention.

In each example, the gas-permeating property, the solvent resistance, and the yield of the resultant asymmetric hollow filamentary membrane were determined by the methods shown below.

(1) Measurement of the gas permeating property and the solvent resistance

A gas-permeating element for measuring the gas-permeating property of the asymmetric hollow filamentary membrane was formed of stainless steel piping, the membrane, and an epoxy adhesive agent.

(a) Measurement (A) of gas-permeating property

The measurement element was fixed in a stainless steel container. Then, a mixture of 20% by volume of hydrogen gas with 80% by volume of methane gas was made to flow through the container at a temperature of 50°C and under a pressure of 10 kg/cm$^2$.

The permeabilities of the hydrogen and methane gases $[P_{H2}]$ and $[P_{CH4}]$ and a permeability ratio $[P_{H2}]/[P_{CH4}]$ of the hydrogen gas to the methane gas were calculated from the results of a gas-chromatography analysis. The permeability ratio $[P_{H2}]/[P_{CH4}]$ represents a permeative selectivity of the membrane of the hydrogen gas from the methane gas.

(b) Measurement (B) of gas-permeating property

The same procedures as in the above-mentioned measurement (A) were carried out, with the following exceptions.

The hydrogen-methane gas mixture was bubbled through a toluene solution at a temperature of 40°C, to thereby add a toluene vapor at a concentration of 7400 ppm to the hydrogen-methane gas mixture. The resultant hydrogen-methane-toluene gas admixture was introduced into the stainless steel container containing the gas-permeating element. The measurement was carried out 18 hours after the start of the introduction of the gas admixture.

(c) Measurement (C) of gas-permeating property

The same procedures as in measurement (A) were carried out, except that the hydrogen-methane gas mixture was replaced by a mixture of 25% by volume of carbon dioxide gas with 75% by volume of nitrogen gas, and the gas mixture was fed to the gas-permeating element at a temperature of 30°C and under a pressure of 10 kg/cm$^2$.

(d) Solvent resistance

The solvent resistance of the hollow filamentary carbon membrane was represented by a ratio (%) of the permeability ratio $[P_{H2}]/[P_{CH4}]$ in measurement (B) to that in measurement (A).

(2) Yield of hollow filamentary membrane

This yield was represented by a ratio (%) of the weight of the resultant hollow filamentary carbon membrane to the weight of the corresponding original aromatic imide polymer material hollow filament.

(3) Elemental analysis of hollow filamentary membrane

This analysis was made by employing an element analyzer available under the trademark of ELEMENT ANALYZER 240-C, from Parkin-Elmer Co.

(4) Confirmation of asymmetric structure of hollow filamentary membrane

A cross-sectional profile of a hollow filamentary membrane was photographed by an electron microscope at a magnification of 10,000. The dense layer and the porous base layer shown by the electron microscopic photograph were observed and confirmed by the naked eye.

Referential Example 1

To a mixture of an acid component consisting of 99 m moles of 3,3′4,4′-biphenyltetracarboxylic dianhydride, with a diamine component consisting of 60 m moles of 4,4′-diaminodiphenylether, 30 m moles of 3,5-diaminobenzoic acid, and 10 m moles of 4,4′-diaminodiphenylmethane was added a solvent consisting of 253 g of p-chlorophenol, and the admixture was charged in a separable flask with a stirrer and a conduit for feeding nitrogen gas therein. The reaction admixture was subjected to polymerization-imidization at a temperature of 180°C for 13 hours, while feeding nitrogen gas into the flask and stirring the reaction admixture.

The obtained aromatic imide copolymer solution had a concentration of the resultant aromatic imide polymer of 15% by weight and exhibited a rotation viscosity of 1116 poises at a temperature of 100°C and of 3920 poises at a temperature of 70°C.

The aromatic imide copolymer solution was filtered through a 400 mesh stainless steel filtering screen, to provide a spinning dope solution.

The spinning dope solution was fed into a hollow filament-spinning nozzle having an outer annular extruding opening with an outside diameter of 1000 μm and a thickness of the annular opening (slit) of 200 μm, and a core opening having an outside diameter of 400 μm, and was extruded through the spinning nozzle. The extruded hollow filamentary stream was introduced through a nitrogen gas atmosphere into a first coagulating bath containing a mixture of 65% by weight of ethylalcohol, the balance consisting of water, at a temperature of 0°C and then into a second coagulating bath containing a mixture of 65% by weight of etyl alcohol with 35% by weight of water at a temperature of 0°C, while forwarding the coagulated hollow filament around the pairs of guide rollers to complete the coagulation. The coagulated hollow filament was taken up from the second coagulating bath at a speed of 15 m/min, and wound up on a bobbin. The hollow filament was thoroughly washed with ethyl alcohol to completely remove the coagulating liquid, the ethyl alcohol in the hollow filament was replaced by isooctane, the hollow filament was dried by evaporating isooctane at a temperature of 100°C and then heat treated at a temperature of 260°C for 30 minutes, and an asymmetric aromatic imide copolymer hollow filament was obtained.

The hollow filament was subjected to a heat-mechanical analysis in a tensile mode in a nitrogen gas atmosphere at a temperate elevation rate of 10°C/min, by using a Du Pont 990 THERMAL ANALYZER (trademark). In this analysis, when a significant elongation of the hollow filament began at a certain temperature, this temperature was deemed to correspond to a softening temperature of the hollow filament. The softening temperature of the hollow filament was 290°C.

Referential Example 2

The same procedures as in Referential Example 1 were carried out, with the following exceptions.

The diamine component consisted of 90 m moles of 3,7-diamino-2,8-dimethyl-diphenylene sulfone and 10 m moles of 4,4′-diaminodiphenylether.

The solvent consisted of 293 g of p-chlorophenol.

The aromatic imide copolymer solution had a concentration of the copolymer of 15% by weight.

The heat treatment for the dried aromatic imide copolymer hollow filament was carried out at a temperature of 300°C.

The heat treated hollow filament did not exhibit a clear softening behavior at a temperature of 450°C or less.

Referential Example 3

The same procedures as in Referential Example 2 were carried out, with the following exceptions.

The polymerization was carried out at a temperature of 180°C for 16 hours.

The concentration of the resultant aromatic imide copolymer in the solution thereof was 15% by weight.

The aromatic imide copolymer solution had a rotation viscosity of 1004 poises at a temperature of 100°C and a rotation viscosity of 1432 poises at a temperature of 90°C.

Example 1

The aromatic imide copolymer hollow filament obtained in Referential Example 1 was thermally stabilized by heat treating in the air at a temperature of 270°C for 38 hours, and then at a temperature of 400°C for 30 minutes, while not under a tension, by using a heating oven.

The thermally stabilized aromatic imide copolymer hollow filament was introduced into a tube-shaped electric furnace equipped with a heating tube made of a quartz glass, a feed roller and a delivery roller.

The heating quartz glass tube was heated at a constant temperature of 700°C while flowing a nitrogen gas therethrough.

The hollow filament was passed through the heating quartz glass tube at a speed of 20 cm/min, so that it stayed in the heating quartz glass tube for 4 minutes, to be thus carbonized.

When the resultant hollow filamentary carbon membrane was immersed in p-chlorophenol which can dissolve therein the original aromatic imide copolymer mentioned in Referential Example 1, and heated therein at a temperature of 200°C for one hour, it was confirmed that the membrane was substantially not dissolved in the solvent.

Also, it was confirmed by the electron microscopic photograph that the hollow filamentary carbon membrane had an asymmetric structure composed of a dense layer located in the outside surface portion thereof and a porous base layer continued from the dense layer and located in the inside surface portion thereof. This asymmetric structure was similar to that of the original aromatic imide copolymer hollow filament.

The result of measurement (A) showed that the asymmetric hollow filamentary carbon membrane had a hydrogen gas permeability $[P_{H2}]$ of 18 x $10^{-5}$ cm$^3$/cm$^2$·sec·cmHg and a permeability ratio $[P_{H2}]/[P_{CH4}]$ of 140.

The result of measurement (B) showed that the asymmetric hollow filamentary carbon membrane had a hydrogen permeability $[P_{H2}]$ of 17 x $10^{-5}$ cm$^3$/cm$^2$·sec·cmHg and a permeability ratio $[P_{H2}]/[P_{CH4}]$ of 148, even though the gas mixture contained a toluene vapor.

The asymmetric hollow filamentary carbon membrane had a solvent resistance of 106%, a yield of 71.5%, and a carbon content of 87.2%.

The results of the elemental analysis are shown in Table 1.

Examples 2 to 5

In each of Examples 2 to 5, the same procedures as in Example 1 were carried out, with the following exceptions.

The aromatic imide copolymer hollow filament prepared in Referential Example 2 was employed in place of that used in Referential Example 1.

The thermal stabilizing and partial carbonizing steps were carried out under the conditions as indicated in Table 1.

The test and analysis results are shown in Table 1.

Comparative Example 1

The above-mentioned tests and analysis were applied to the aromatic imide copolymer hollow filament prepared in Referential Example 2.

The test and analysis results are indicated in Table 1.

From Table 1, it is clear that the aromatic imide copolymer hollow filament had a poor solvent resistance of 15%.

Comparative Example 2

The aromatic imide copolymer hollow filament prepared in Referential Example 2 was thermally stabilized in the air in a heating oven at a temperature of 400°C, while not under a tension, for 30 minutes.

This thermally stabilized hollow filament was subjected to the above-mentioned tests and analysis.

The results shown in Table 1 clearly indicate that the thermally stabilized hollow filament had a low content of carbon of 66.4%, and thus had a poor solvent resistance of 35%.

Comparative Example 3

The same procedures as in Example 4 were carried out except that the carbonizing temperature was changed to 1000°C.

The test and analysis results are shown in Table 1.

Table 1 shows that the resultant hollow filamentary carbon membrane had a low content of hydrogen of 0.6% and exhibited a low hydrogen gas permeability of 1.1 x $10^{-5}$ cm$^3$/cm$^2$·sec·cmHg, and therefore, was practically useless.

Table 1

| Item | Type of aromatic imide copolymer hollow filament (*)1 | Production of hollow filamentary carbon membrane | | | | | Hollow filamentary carbon membrane | | | | | | | | | | |
| | | Thermal stabilizing step | | Partial carbonizing step | | Yield | Elemental analysis (wt %) | | | | | Measurement (A) | | Measurement (B) | | Solvent resist-ance |
| | | Temper-ature | Time | Temper-ature | Time | (% wt) | | | | | | $[P_{H2}]$ (x $10^{-5}$ cm$^3$/cm$^2$·sec·cmHg) | $\dfrac{[P_{H2}]}{[P_{CH4}]}$ | $[P_{H2}]$ (x $10^{-5}$ cm$^3$/cm$^2$·sec·cmHg) | $\dfrac{[P_{H2}]}{[P_{CH4}]}$ | (%) |
| Example No. | | (°C) | (hr) | (°C) | (min) | | Carbon | Nytrogen | Hydrogen | Sulfur | Oxygen | | | | | |
| Example 1 | 1 | 270 400 | 38 0.5 | 700 | 4 | 71.5 | 87.2 | 4.7 | 2.1 | 0 | 6.0 | 18 | 140 | 17 | 148 | 106 |
| 2 | 2 | 350 | 8 | 600 | 4 | 81.5 | 79.5 | 5.7 | 2.4 | 2.0 | 10.4 | 11 | 211 | 6.5 | 208 | 99 |
| 3 | 2 | 400 | 0.5 | 500 | 10 | 92.2 | 71.3 | 5.9 | 2.9 | 3.7 | 16.2 | 19 | 184 | 7.2 | 171 | 93 |
| 4 | 2 | 400 | 0.5 | 600 | 4 | 89.7 | 75.2 | 5.7 | 2.9 | 1.9 | 14.3 | 40 | 235 | 19 | 232 | 99 |
| 5 | 2 | 400 | 0.5 | 700 | 4 | 73.4 | 85.1 | 4.5 | 2.3 | 2.9 | 5.2 | 42 | 560 | 36 | 409 | 73 |
| Compar-ative Example 1 | 2 | - | - | - | - | - | 68.2 | 5.3 | 3.0 | 5.5 | 18.0 | 16 | 167 | 6.2 | 25 | 15 |
| 2 | 2 | 400 | 0.5 | - | - | - | 67.4 | 5.1 | 3.0 | 5.3 | 19.1 | 6.3 | 153 | 3.2 | 53 | 35 |
| 3 | 2 | 400 | 0.5 | 1000 | 4 | 69.3 | 93.2 | 2.9 | 0.6 | 1.9 | 1.4 | 1.1 | 721 | - | - | - |

Note: (*)1 ... Number of Referential Example

EP 0 459 623 B1

## Examples 6 and 7

In Example 6, the same procedures as in Example 1 were carried out, with the following exceptions.

The aromatic imide copolymer hollow filament prepared in Referential Example 3 was converted to a hollow filamentary carbon membrane.

The thermal stabilizing step was carried out in the air in a heating oven at a temperature of 400°C, while not under a tension, for 30 minutes.

The carbonizing step was carried out in the same manner as in Example 1.

The resultant hollow filamentary carbon membrane was subjected to the gas-permeating property measurements (A) and (C).

The results of Example 6 are shown in Table 2.

The hollow filamentary carbon membrane was subjected to an additional heat treating step in the air in a heating oven at a temperature of 300°C, while not under a tension, for 30 minutes.

It was confirmed by electron microscopic observation at a magnification of 10,000 that the resultant additionally heat treated hollow filamentary carbon membrane had an asymmetric structure composed of a dense layer and a porous base layer.

In Example 7, the same procedures as in Example 6 were carried out, except that the additional heat treating step was applied to the hollow filamentary carbon membrane mentioned in Example 6 in an argon gas atmosphere instead of in air.

The results of the measurement (C) and the elemental analysis applied to the additionally heat treated hollow filamentary carbon membranes are shown in Table 3.

## Examples 8 to 11

In each of Examples 8 and 10, the same procedures as in Example 6 were carried out except that, in the partial carbonizing step, the temperature of the heating quartz glass tube was changed to 800°C in Example 8 and to 900°C in Example 10.

The results of the measurements (A) and (C) of the hollow filamentary carbon membranes of Examples 8 and 10 are shown in Table 2.

In Example 9, the same procedures as in Example 8 were carried out except that the additional heat treating step was applied to the hollow filamentary carbon membrane mentioned in Example 8, in an argongas atmosphere.

In Example 11, the smae procedures as in Example 10 were carried out except that the additional heat treating step was applied to the hollow filamentary carbon membrane mentioned in Example 10, in an argon atmosphere.

The results of the measurement (C) and the elemental analysis of the additionally heat treated hollow filamentary carbon membranes are shown in Table 3.

## Examples 12 and 13

In each of Examples 12 and 13, the same procedures as in Example 10 were carried out, with the following exceptions.

Before the additional heat treating step, in Example 12 the hollow filamentary carbon membrane was immersed in a concentrated sulfuric acid at room temperature for 12 hours and in Example 13 in an aqueous solution of 70% by weight of nitric acid at room temperature for 12 hours, and washed with an ion-exchanged water to completely remove the acid from the membrane.

The results of the test and analysis of the additionally heat treated membranes are shown in Table 3.

## Example 14

The same procedures as in Example 10 were carried out, except that the additional heat treating time was changed from 30 minutes to 120 minutes.

The results of the test and analysis of the additionally heat treated membrane are shown in Table 3.

EP 0 459 623 B1

Table 2

| Item | Type of aromatic imide copolymer hollow filament (*)$_2$ | Production of hollow filamentary carbon membrane | | | | Hollow filamentary carbon membrane | | | |
|---|---|---|---|---|---|---|---|---|---|
| | | Thermally stabilizing step | | Partial carbonizing step | | Measurement (A) | | Measurement (C) | |
| Example No. | | Temper- ature (°C) | Time (min) | Temper- ature (°C) | Time (min) | $[P_{H2}]$ (x $10^{-5}$ $cm^3/cm^2$ · sec·cmHg) | $[P_{H2}]/[P_{CH4}]$ | $[P_{CO2}]$ (x $10^{-5}$ $cm^3/cm^2$ · sec·cmHg) | $[P_{CO2}]/[P_{N2}]$ |
| Example 6 | 3 | 400 | 30 | 700 | 4 | 56.4 | 296 | 1.07 | 39 |
| " 8 | 3 | 400 | 30 | 800 | 4 | 13.3 | 1130 | 0.221 | 6.1 |
| " 10 | 3 | 400 | 30 | 900 | 4 | 5.83 | 477 | (*)$_3$ | - |

Note:  (*)$_2$ ... Number of Referential Example

(*)$_3$ ... Very low

Table 3

| Item | Type of hollow filamentary carbon membrane | Additional heat treating step | | | | Additionally heat treated hollow filamentary carbon membrane | | | | | | |
|---|---|---|---|---|---|---|---|---|---|---|---|---|
| | | Pretreatment with $H_2SO_4$ or $HNO_3$ | Atmosphere | Temperature | Time | Elemental analysis (wt %) | | | | | Measurement (C) | |
| Example No. | (*)$_4$ | | | (°C) | (min) | Carbon | Nytrogen | Hydrogen | Sulfur | Oxygen | $[P_{CO2}]$ (x $10^{-5}$ cm$^3$/cm$^2$·sec·cmHg) | $[P_{CO2}]/[P_{N2}]$ |
| Example 6 | 6 | None | Air | 300 | 30 | 85.1 | 4.5 | 2.0 | 2.9 | 5.5 | 21.3 | 39 |
| Example 7 | 6 | " | Argon | 300 | 30 | 85.0 | 4.5 | 2.2 | 2.9 | 5.3 | 2.18 | 37 |
| Example 8 | 8 | " | Air | 300 | 30 | (*)$_5$ | (*)$_6$ | (*)$_7$ | - | - | 9.07 | 56 |
| Example 9 | 8 | " | Argon | 300 | 30 | (*)$_5$ | (*)$_6$ | (*)$_7$ | - | - | 1.07 | 18 |
| Example 10 | 10 | " | Air | 300 | 30 | (*)$_5$ | (*)$_6$ | (*)$_7$ | - | - | 4.06 | 61 |
| Example 11 | 10 | " | Argon | 300 | 30 | (*)$_5$ | (*)$_6$ | (*)$_7$ | - | - | <001 | - |
| Example 12 | 10 | Conc. $H_2SO_4$ | Air | 300 | 30 | (*)$_5$ | (*)$_6$ | (*)$_7$ | - | - | 2.36 | 70 |
| Example 13 | 10 | Aqueous $HNO_3$ soln. | Air | 300 | 30 | (*)$_5$ | (*)$_6$ | (*)$_7$ | - | - | 2.15 | 68 |
| Example 14 | 10 | Conc. $H_2SO_4$ | Air | 300 | 120 | (*)$_5$ | (*)$_6$ | (*)$_7$ | - | - | 43.4 | 32 |

Note: (*)$_4$ ... Number of Example
(*)$_5$ ... 86 - 90%
(*)$_6$ ... 3.5 - 4.4%
(*)$_7$ ... 1.5 - 2.0%

EP 0 459 623 B1

## Claims

1. An asymmetric hollow filamentary carbon membrane, composed of a partial carbonization product of an symmetric hollow filament comprising an aromatic imide polymer material, comprising 70% to 93% by weight of carbon, 3.5% to 7.0% by weight of nitrogen, 1.0% to 4.0% by weight of hydrogen and the balance consisting of at least one member selected from oxygen, sulfur and the other elements, and having a dense layer located in the outside surface portion of the hollow filamentary membrane and a porous base layer continued from the dense layer and located in the inside surface portion of the hollow filamentary membrane.

2. The asymmetric carbon membrane as claimed in claim 1, wherein the carbonization product of the aromatic imide polymer material comprises 70% to 90% by weight of carbon, 4.0% to 6.5% by weight of nitrogen, 1.5% to 3.5% by weight of hydrogen and the balance consisting of at least one member selected from oxygen and sulfur.

3. The asymmetric carbon membrane as claimed in claim 1, wherein the dense layer has a thickness of 0.0005 to 5 $\mu$m.

4. The asymmetric carbon membrane as claimed in claim 1, wherein the porous base layer has a thickness of 10 to 1000 $\mu$m.

5. The asymmetric carbon membrane as claimed in claim 1, wherein the porous base layer has a number of fine pores having a size of from 5 to 2000m $\mu$m.

6. The asymmetric carbon membrane as claimed in claim 1, which has a hydrogen gas-permeability $[P_{H2}]$ of 3 x $10^{-5}$ to 80 x $10^{-5}$ cm$^3$/cm$^2$·sec·cmHg at a temperature of 50°C.

7. The asymmetric carbon membrane as claimed in claim 1, which has a ratio of a hydrogen gas-permeability $[P_{H2}]$ to a methane gas-permeability $[P_{CH4}]$ of 80 to 1000, at a temperature of 50°C.

8. The asymmetric carbon membrane as claimed in claim 1, which has an outside diameter of 100 to 2000 $\mu$m and a thickness of the membrane of 10 to 300 $\mu$m.

9. A process for producing the asymmetric hollow filamentary carbon membrane as claimed in claim 1, comprising the steps of:

   forming an asymmetric hollow filament comprising an aromatic imide polymer material and having a dense layer located in the outside surface portion thereof and a porous base layer continued from the dense layer and located in the inside surface portion thereof and having a number of fine pores;

   thermally stabilizing the asymmetric aromatic imide polymer material hollow filament by heat-treating same in a molecular oxygen-containing atmosphere at a temperature of from 250 to 495°C for 0.1 to 100 hours, at which temperature the asymmetric structure of the hollow filament remains unchanged; and

   partially carbonizing the thermally stabilized aromatic imide polymer material hollow filament in an inert gas atmosphere at a temperature of 500 to 900°C for 0.5 second to 100 minutes.

10. The process as claimed in claim 9, wherein the aromatic imide polymer material is a polymerization and imidization product of an aromatic tetracarboxylic acid component comprising at least one member selected from biphenyl tetracarboxylic acids and dianhydrides, salts and esters thereof, with an aromatic diamine component comprising at least one member selected from diaminodialkyldiphenyl sulfons, diaminodiphenylmethane and 4,4'-diaminodiphenylether, in a molar amount substantially equal to that of the aromatic tetracarboxylic acid component, in an organic solvent.

11. The process as claimed in claim 9, wherein the asymmetric aromatic imide polymer material hollow filament is formed by extruding a dope solution of the aromatic imide polymer material in an organic solvent through a hollow filament-forming spinning orifice into an inert gas atmosphere; coagulating the hollow filamentary stream of the dope solution in a coagulating liquid to form a solid hollow filament; and drying the resultant hollow filament.

**12.** The process as claimed in claim 9, wherein the asymmetric aromatic imide polymer material hollow filament has a hydrogen gas-permeability of 1 x $10^{-5}$ to 100 x $10^{-5}$ cm$^3$/cm$^2$·sec·cmHg, at a temperature of 50°C.

**13.** The process as claimed in claim 9, wherein the asymmetric aromatic imide polymer material hollow filament has a ratio of the hydrogen gas-permeating rate to a methane gas-permeability of 30 to 250 at a temperature of 50°C.

**14.** The process as claimed in claim 9, wherein in the asymmetric aromatic imide polymer material hollow filament, the dense layer located in the outside surface portion of the hollow filament has a thickness of 0.001 to 5 μm and the porous layer continued from the dense layer and located in the inside surface portion of the hollow filament has a thickness of 10 to 1000 μm.

**15.** The process as claimed in claim 9, wherein the thermal stabilizing step of the aromatic imide polymer material hollow filament is carried out, when the aromatic imide polymer material has a softening or glass-transition temperature, at a temperature of at least 5°C below the softening or glass transition temperature of the aromatic imide polymer material, or, when the aromatic imide polymer material does not exhibit a softening or glass transition temperature, at a temperature at which a significant change in the asymmetric structure of the aromatic imide polymer material hollow filament or in the average size of the fine pores in the porous layer, is not recognized by microscopic observation.

**16.** The process as claimed in claim 9, wherein the thermal stabilizing step is carried out by gradually raising the heat-treating temperature on the asymmetric aromatic imide polymer material hollow filament from 280°C to 450°C.

**17.** The process as claimed in claim 9, wherein the thermal stabilizing step is carried out at a temperature of 250°C to 350°C for 5 to 100 hours and then at a temperature of 350°C to 490°C for 10 to 300 minutes.

**18.** The process as claimed in claim 9, wherein inert gas atmosphere for the partial carbonizing step comprises at least one member selected from nitrogen, helium, and argon gases.

**19.** The process as claimed in claim 9, wherein the partial carbonizing step is carried out by raising the carbonizing temperature from a level of 500°C to 600°C to a level of 700°C to 800°C over a time of 10 seconds to 60 minutes.

**20.** The process as claimed in claim 9, wherein the partial carbonizing step is effected at a temperature of 500°C to 550°C for 0.5 to 60 minutes and then at a temperature of 600°C to 800°C for 0.5 second to 20 minutes.

**21.** The process as claimed in claim 9, which further comprises an additional step of, after the partial carbonizing step, heat treating the resultant hollow filamentary carbon membrane in a molecular oxygen-containing atmosphere at a temperature of 250°C to 450°C.

**22.** The process as claimed in claim 21, wherein the hollow filamentary carbon membrane to be subjected to the additional heat-treating step has a carbon dioxide gas-permeability [$P_{CO2}$] of 0.5 x $10^{-5}$ to 10 x $10^{-5}$ cm$^3$/cm$^2$·sec·cmHg at a temperature of 30°C and a ratio of the carbon gas-permeability [$P_{CO2}$] to a nitrogen gas-permeability [$P_{N2}$] of 10 to 70 at a temperature of 30°C.

**23.** The process as claimed in claim 21, wherein before the additional heat treating step, the hollow filamentary carbon membrane is treated with a concentrated sulfuric acid or nitric acid at a temperature of 0°C to 80°C and then with an ion-exchanged water at a temperature of 5 to 60°C.

**24.** The process as claimed in claim 21, wherein the additionally heat-treated hollow filamentary carbon membrane has a carbon dioxide gas-permeability [$P_{CO2}$] of 1 x $10^{-5}$ to 80 x $10^{-5}$ cm$^3$/cm$^2$·sec·cmHg at a temperature of 30°C, and a ratio of the carbon dioxide gas-permeability [$P_{CO2}$] to a nitrogen gas-permeability [$P_{N2}$] of 20 to 100 at a temperature of 30°C.

## Revendications

1. Membrane filamenteuse creuse asymétrique à base de carbone, comprenant un produit de carbonisation partielle d'un filament creux asymétrique comprenant une matière à base de polymère imide aromatique, comprenant de 70 % à 93 % en poids de carbone, de 3,5 % à 7,0 % en poids d'azote, de 1,0 % à 4,0 % en poids d'hydrogène, et le reste consistant en au moins un élément choisi parmi l'oxygène, le soufre et les autres éléments, et comportant une couche dense située sur la surface externe de la membrane filamenteuse creuse, et une couche de base poreuse en continuité avec la couche dense, située sur la surface interne de la membrane filamenteuse creuse.

2. Membrane asymétrique à base de carbone selon la revendication 1, dans laquelle le produit de carbonisation de la matière à base de polymère imide aromatique, comprend de 70 à 90 % en poids de carbone, de 4,0 % à 6,5 % en poids d'azote, de 1,5 % à 3,5 % en poids d'hydrogène, et le reste consistant en au moins un élément choisi parmi l'oxygène et le soufre.

3. Membrane asymétrique à base de carbone selon la revendication 1, dans laquelle la couche dense a une épaisseur de 0,0005 à 5 $\mu$m.

4. Membrane asymétrique à base de carbone selon la revendication 1, dans laquelle la couche poreuse de base a une épaisseur de 10 à 1 000 $\mu$m.

5. Membrane asymétrique à base de carbone selon la revendication 1, dans laquelle la couche poreuse de base comprend de nombreux pores fins ayant une taille de 5 à 2 000 $\mu$m.

6. Membrane asymétrique à base de carbone selon la revendication 1, ayant une perméabilité à l'hydrogène gazeux ($P_{H2}$) de 3 x $10^{-5}$ à 80 x $10^{-5}$ cm$^3$/cm$^2$.s.cmHg à une température de 50 °C.

7. Membrane asymétrique à base de carbone selon la revendication 1, ayant un rapport de la perméabilité à l'hydrogène gazeux ($P_{H2}$) à la perméabilité au méthane gazeux ($P_{CH4}$) de 80 à 1 000, à une température de 50 °C.

8. Membrane asymétrique à base de carbone selon la revendication 1, ayant un diamètre extérieur de 100 à 2 000 $\mu$m, et une épaisseur de membrane de 10 à 300 $\mu$m.

9. Procédé de production de la membrane filamenteuse creuse asymétrique à base de carbone selon la revendication 1, comprenant les étapes consistant :
   à former un filament creux asymétrique comprenant une matière à base de polymère imide aromatique et comportant une couche dense située sur sa surface externe, et une couche de base poreuse en continuité avec la couche dense, et située sur sa surface interne et comportant de nombreux pores fins ;
   à stabiliser à chaud le filament creux de matière à base de polymère imide aromatique asymétrique, par traitement thermique de celui-ci dans une atmosphère contenant de l'oxygène moléculaire à une température de 250 à 495 °C pendant 0,1 à 100 h, température à laquelle la structure asymétrique du filament creux reste inchangée ; et
   à carboniser partiellement le filament creux de matière à base de polymère imide aromatique stabilisé à chaud, dans une atmosphère de gaz inerte à une température de 500 à 900 °C pendant 0,5 s à 100 minutes.

10. Procédé selon la revendication 9, dans lequel la matière à base de polymère imide aromatique est un produit de polymérisation et d'imidisation d'un composant à base d'acide tétracarboxylique aromatique comprenant au moins un composé choisi parmi les acides biphényltétracarboxyliques et les dianhydrides, les sels et les esters dérivés de ceux-ci, avec un composant à base de diamine aromatique comprenant au moins un composé choisi parmi les diaminodialkyldiphénylsulfones, le diaminodiphénylméthane et l'éther de 4,4'-diaminodiphényle, selon une quantité molaire à peu près égale à celle du composant à base d'acide tétracarboxylique aromatique, dans un solvant organique.

11. Procédé selon la revendication 9, dans lequel le filament creux asymétrique de matière à base de polymère imide aromatique est formé par extrusion d'une solution pâteuse de la matière à base de polymère imide aromatique dans un solvant organique, à travers un orifice de filage générateur de filament creux, dans une atmosphère de gaz inerte ; en coagulant le courant de filament creux de la solution pâteuse dans un liquide coagulant pour former un filament creux solide ; et en séchant le filament creux résultant.

12. Procédé selon la revendication 9, dans lequel le filament creux asymétrique de matière à base de polymère imide aromatique, a une perméabilité à l'hydrogène gazeux de 1 x $10^{-5}$ à 100 x $10^{-5}$ cm³/cm².s.cmHg à une température de 50 °C.

13. Procédé selon la revendication 9, dans lequel le filament creux asymétrique de matière à base de polymère imide aromatique, a un rapport de la vitesse de filtration hydrogène gazeux à la perméabilité au méthane gazeux de 30 à 250 à une température de 50 °C.

14. Procédé selon la revendication 9, dans lequel dans le filament creux asymétrique de matière à base de polymère imide aromatique, la couche dense située sur la surface externe du filament creux, a une épaisseur de 0,001 à 5 μm, et la couche poreuse en continuité avec la couche dense est située sur la surface interne du filament creux, a une épaisseur de 10 à 1 000 μm.

15. Procédé selon la revendication 9, dans lequel l'opération de stabilisation thermique du filament creux de matière à base de polymère imide aromatique est effectuée, lorsque la matière à base de polymère imide aromatique a une température de ramollissement de transition vitreuse, à une température d'au moins 5 °C inférieure à la température de ramollissement ou de transition vitreuse de la matière à base de polymère imide aromatique, ou lorsque la matière à base de polymère imide aromatique n'a pas de température de ramollissement ou de transition vitreuse, à une température à laquelle il ne se manifeste pas de modification notable de la structure asymétrique du filament creux de matière à base de polymère imide aromatique ou de la taille moyenne des pores fins dans la couche poreuse, d'après observation microscopique.

16. Procédé selon la revendication 9, dans lequel l'opération de stabilisation thermique est effectuée en élevant progressivement la température de traitement thermique du filament creux asymétrique de matière à base de polymère imide aromatique, de 280 °C jusqu'à 450 °C.

17. Procédé selon la revendication 9, dans lequel l'opération de stabilisation thermique est effectuée à une température de 250 °C à 350 °C pendant 5 à 100 heures, puis à une température de 350 °C à 490 °C pendant 10 à 300 minutes.

18. Procédé selon la revendication 9, dans lequel l'atmosphère de gaz inerte de l'opération de carbonisation partielle, comprend au moins un composant choisi parmi l'azote, l'hélium et l'argon gazeux.

19. Procédé selon la revendication 9, dans lequel l'opération de carbonisation partielle est effectuée en élevant la température de carbonisation à partir d'un niveau de 500 °C à 600 °C jusqu'à un niveau de 700 °C à 800 °C en 10 secondes à 60 minutes.

20. Procédé selon la revendication 9, dans lequel l'opération de carbonisation partielle est effectuée à une température de 500 à 550 °C pendant 0,5 à 60 minutes, puis à une température de 600 °C à 800 °C pendant 0,5 s à 20 minutes.

21. Procédé selon la revendication 9, comprenant en outre une opération supplémentaire, après l'opération de carbonisation partielle, de traitement thermique de la membrane filamenteuse creuse à base de carbone résultante, dans une atmosphère contenant de l'oxygène moléculaire, à une température de 250 °C à 450 °C.

22. Procédé selon la revendication 21, dans lequel la membrane filamenteuse creuse à base de carbone destinée à être soumise à l'opération de traitement thermique supplémentaire, a une perméabilité au dioxyde de carbone gazeux ($P_{CO2}$) de 0,5 x $10^{-5}$ à 10 x $10^{-5}$ cm³/cm².s.cmHg à une température de 30 °C, et un rapport de la perméabilité au dioxyde de carbone gazeux ($P_{CO2}$) à la perméabilité à l'azote gazeux ($P_{N2}$) de 10 à 70 à une température de 30 °C.

23. Procédé selon la revendication 21, dans lequel avant l'opération de traitement thermique supplémentaire, la membrane filamenteuse creuse à base de carbone, est traitée avec de l'acide sulfurique ou de l'acide nitrique concentré à une température de 0 °C à 80 °C, puis avec de l'eau venue d'échange d'ions à une température de 5 à 60 °C.

**24.** Procédé selon la revendication 21, dans lequel la membrane filamenteuse creuse à base de carbone venue de traitement thermique supplémentaire, a une perméabilité au dioxyde de carbone gazeux ($P_{CO2}$) de 1 x 10$^{-5}$ à 80 x 10$^{-5}$ cm$^3$/cm$^2$.s.cmHg à une température de 30 °C, et un rapport de la perméabilité au dioxyde de carbone gazeux ($P_{CO2}$) à la perméabilité à l'azote gazeux ($P_{N2}$) de 20 à 100, à une température de 30 °C.

## Patentansprüche

**1.** Eine asymmetrische Hohlfadenmembran aus Kohlenstoff, die aus einem partiellen Carbonisierungsprodukt eines symmetrischen Hohlfadens gebildet ist, welcher ein aromatisches Imidpolymermaterial umfaßt, enthaltend 70 bis 93 Gew.-% Kohlenstoff, 3,5 bis 7 Gew.-% Stickstoff, 1,0 bis 4,0 Gew.-% Wasserstoff und dem Rest, bestehend aus mindestens einem Mitglied, welches ausgewählt ist aus Sauerstoff, Schwefel und den anderen Elementen, und welcher eine dichte Schicht, die in dem äußeren Oberflächenbereich der Hohlfadenmembran liegt, und eine poröse Basisschicht aufweist, die sich an die dichte Schicht anschließt und in dem inneren Oberflächenbereich der Hohlfadenmembran liegt.

**2.** Die asymmetrische Kohlenstoffmembran nach Anspruch 1, bei der das Carbonisierungsprodukt des aromatischen Imidpolymermaterials 70 bis 90 Gew.-% Kohlenstoff, 4,0 bis 6,5 Gew.-% Stickstoff, 1,5 bis 3,5 Gew.-% Wasserstoff und dem Rest, bestehend aus mindestens einem Mitglied, das ausgewählt ist aus Sauerstoff und Schwefel, besteht.

**3.** Die asymmetrische Kohlenstoffmembran nach Anspruch 1, bei der die dichte Schicht eine Dicke von 0,0005 bis 5 μm hat.

**4.** Die asymmetrische Kohlenstoffmembran nach Anspruch 1, bei der die poröse Basisschicht eine Dicke von 10 bis 1000 μm hat.

**5.** Die asymmetrische Kohlenstoffmembran nach Anspruch 1, bei der die poröse Basisschicht eine Anzahl von feinen Poren mit einer Größe von 5 bis 2000m μm hat.

**6.** Die asymmetrische Kohlenstoffmembran nach Anspruch 1, welche bei einer Temperatur von 50°C eine Wasserstoff-Gaspermeabilität ($P_{H2}$) von 3,5 x 10$^{-5}$ bis 80 x 10$^{-5}$ cm$^3$/cm$^2$.sec.cmHg hat.

**7.** Die asymmetrische Kohlenstoffmembran nach Anspruch 1, welche bei einer Temperatur von 50°C ein Verhältnis einer Wasserstoff-Gaspermeabilität ($P_{H2}$) zu einer Methan-Gaspermeabilität ($P_{CH4}$) von 80 bis 1000 hat.

**8.** Die asymmetrische Kohlenstoffmembran nach Anspruch 1, welche einen Außendurchmesser von 100 bis 2000 μm und eine Dicke der Membran von 10 bis 300 μm hat.

**9.** Ein Verfahren zur Herstellung der asymmetrischen Hohlfadenmembran aus Kohlenstoff gemäß Anspruch 1, umfassend die folgenden Schritte:
Bildung eines asymmetrischen Hohlfadens, welcher ein aromatisches Imidpolymermaterial umfaßt und einen in dem äußeren Oberflächenbereich desselben liegende dichte Schicht und eine poröse Basisschicht aufweist, die sich an die dichte Schicht anschließt und in dem inneren Oberflächenbereich derselben liegt und eine Anzahl von feinen Poren hat;
thermisches Stabilisieren des aus dem aromatischen Imidpolymermaterial bestehenden asymmetrischen Hohlfadens durch Hitzebehandlung desselben während 0,1 bis 100 Stunden in einer einen melekolaren Sauerstoff enthaltenden Atmosphäre bei einer Temperatur von 250 bis 495°C, bei welcher Temperatur die asymmetrische Struktur des Hohlfadens unverändert bleibt; und
partielles Carbonisieren des thermisch stabilisierten, aus aromatischem Imidpolymermaterial bestehenden Hohlfadens während 0,5 bis 100 Minuten in einer inarten Gasatmosphäre bei einer Temperatur von 500 bis 900°C.

**10.** Das Verfahren nach Anspruch 9, bei dem das aromatische Imidpolymermaterial ein Polymerisations- und Imidisierungsprodukt einer aromatischen Tetracarbonsäurekomponente, die mindestens ein Mitglied enthält, welches ausgewählt ist aus Biphenyltetracarbonsäuren und Dianhydriden, Salzen und Estern davon, mit einer aromatischen Diaminkomponente, welche mindestens ein Mitglied enthält, welches ausgewählt ist aus Diaminodialkyldiphenylsulfonen, Diaminodiphenylmethan und 4,4'-Diaminodiphenylether, in einer molaren Menge, welche im wesentlichen gleich derjenigen der aromatischen Tetracarbonsäurekomponente ist, in einem organischen Lösungsmittel.

11. Das Verfahren nach Anspruch 9, bei dem der asymmetrische, aus aromatischen Imidpolymermaterial bestehende Hohlfaden gebildet ist durch Extrudieren einer Spinnlösung des aromatischen Imidpolymermaterials in einem organischen Lösungsmittel durch eine einen Hohlfaden bildende Spinnöffnung in eine Inertgasatmosphäre, Koagulieren der hohlen Fadenströmung der Spinnlösung in eine Koagulierflüssigkeit, um einen festen Hohlfaden zu bilden, und Trocknen des resultierenden Hohlfadens.

12. Das Verfahren nach Anspruch 9, bei dem der asymmetrische, aus aromatischem Imidpolymermaterial bestehende Hohlfaden bei einer Temperatur von 50°C eine Wasserstoff-Gaspermeabilität von $1 \times 10^{-5}$ bis $100 \times 10^{-5}$ cm³/cm².sec.cmHg hat.

13. Das Verfahren nach Anspruch 9, bei dem der asymmetrische, aus aromatischem Imidpolymer bestehende Hohlfaden bei einer Temperatur von 50°C ein Verhältnis der Wasserstoff-Gaspermeabilitätsgeschwindigkeit zu einer Methan-Gaspermeabilität von 30 bis 250 hat.

14. Das Verfahren nach Anspruch 9, bei dem in dem asymmetrischen, aus aromatischem Imidpolymermaterial bestehenden Hohlfaden die in dem äußeren Oberflächenbereich des Hohlfadens liegende dichte Schicht eine Dicke von 0,001 bis 5 μm und die an die dichte Schicht anschließende und in dem inneren Oberflächenbereich des Hohlfadens liegende poröse Schicht eine Dicke von 10 bis 1000 μm hat.

15. Das Verfahren nach Anspruch 9, bei dem der thermische Stabilisierungsschritt des aus aromatischem Imidpolymermaterial bestehenden Hohlfadens, wenn das aromatische Imidpolymermaterial eine Erweichungs- oder Glasübergangstemperatur hat, bei einer Temperatur von mindestens 5°C unter der Erweichungs- oder Glasübergangstemperatur des aromatischen Imidpolymermaterials durchgeführt wird, oder, wenn das aromatische Imidpolymermaterial keine Erweichungs- oder Glasübergangstemperatur aufweist, bei einer Temperatur, bei der eine signifikante Veränderung in der asymmetrischen Struktur des aus aromatischem Imidpolymermaterial bestehenden Hohlfadens oder in der mittleren Größe der feinen Poren in der porösen Schicht durch mikroskopische Beobachtung nicht feststellbar ist.

16. Das Verfahren nach Anspruch 9, bei dem der thermische Stabilisierungsschritt durchgeführt wird, indem man die auf den asymmetrischen, aus aromatischem Imidpolymermaterial bestehenden Hohlfaden einwirkende Hitzebehandlungstemperatur schrittweise von 280°C auf 450°C erhöht.

17. Das Verfahren nach Anspruch 9, bei dem der thermische Stabilisierungsschritt 5 bis 100 Stunden lang bei einer Temperatur von 250°C bis 350°C und anschließend 10 bis 300 Minuten lang bei einer Temperatur von 350°C bis 490°C durchgeführt wird.

18. Das Verfahren nach Anspruch 9, bei dem die Inertgasatmosphäre für den partiellen Carbonisierungsschritt mindestens ein Mitglied umfaßt, welches ausgewählt ist aus Stickstoff-, Helium- und Argongasen.

19. Das Verfahren nach Anspruch 9, bei dem der partielle Carbonisierungsschritt durchgeführt wird, indem man die Carbonisierungstemperatur über eine Zeit von 10 Sekunden bis 60 Minuten von einem Niveau von 500°C bis 600°C auf ein Niveau von 700°C bis 800°C erhöht.

20. Das Verfahren nach Anspruch 9, bei dem der partielle Carbonisierungsschritt 0,5 bis 60 Minuten lang bei einer Temperatur von 500°C bis 550°C und dann 0,5 Sekunden bis 20 Minuten lang bei einer Temperatur von 600°C bis 800°C durchgeführt wird.

21. Das Verfahren nach Anspruch 9, welches weiterhin nach dem teilweisen Carbonisierungsschritt eine zusätzliche Stufe einer Hitzebehandlung der resultierenden Hohlfadenmembran aus Kohlenstoff in einer molekularen Sauerstoff enthaltenden Atmosphäre bei einer Temperatur von 250°C bis 450°C umfaßt.

22. Das Verfahren nach Anspruch 21, bei dem die der zusätzlichen Hitzebehandlungsstufe zu unterwerfende Hohlfadenmembran aus Kohlenstoff bei einer Temperatur von 30°C eine Kohlenstoffdioxid-Gaspermeabilität ($P_{CO2}$) von $0,5 \times 10^{-5}$ bis $10 \times 10^{-5}$ cm³/cm² .sec.cmHG und bei einer Temperatur von 30°C ein Verhältnis der Kohlenstoff-Gaspermeabilität ($P_{CO2}$) zu einer Stickstoff-Gaspermeabilität ($P_{N2}$) von 10 bis 70 hat.

23. Das Verfahren nach Anspruch 21, bei dem vor der zusätzlichen Hitzebehandlungsstufe die Hohlfadenmembran aus Kohlenstoff bei einer Temperatur von 0°C bis 80°C mit einer konzentrierten Schwefelsäure oder Stickstoffsäure und dann bei einer Temperatur von 5 bis 60°C mit einem ionenausgetauschtem Wasser behandelt.

24. Das Verfahren nach Anspruch 21, bei dem die einer zusätzlichen Hitzebehandlung unterworfene Hohlfadenmembran aus Kohlenstoff bei einer Temperatur von 30°C eine Kohlenstoffdioxid-Gaspermeabilität ($P_{CO2}$) von 1 x $10^{-5}$ bis 80 x $10^{-5}$ cm³/cm².sec.cmHg, und bei einer Temperatur von 30°C ein Verhältnis der Kohlenstoffdioxid-Gaspermeabilität ($P_{CO2}$) zu einer Stickstoff- gaspermeabilität ($P_{N2}$) von 2 bis 100 hat.